# EUROPÄISCHE PATENTSCHRIFT

(11) **EP 1 279 457 B1**
(45) Veröffentlichungstag und Bekanntmachung des Hinweises auf die Patenterteilung: **24.01.2007**
(21) Anmeldenummer: 02011475.7
(22) Anmeldetag: 24.05.2002
(51) Int. Cl.: B23K 1/00, F01D 11/12

(54) **Verfahren zur Herstellung eines Dichtungselements**
Manufacturing method of sealing elements
Méthode de fabrication d'éléments d'étanchéité

(30) Priorität: 24.07.2001 DE 10135974
(43) Veröffentlichungstag der Anmeldung: 29.01.2003
(73) Patentinhaber: Rolls-Royce Deutschland Ltd & Co KG, 15827 Dahlewitz (DE)
(72) Erfinder: Schreiber, Karl, 15806 Mellensee (DE); Goebel, Matthias, 12307 Berlin (DE); Reuter, Stefan, 10961 Berlin (DE)
(74) Vertreter: Weber, Joachim

(56) Entgegenhaltungen:
- FR-A- 2 258 524
- JP-A- 2 251 364
- JP-A- 59 179 265
- US-A- 4 869 421

## Beschreibung

Die Erfindung bezieht sich auf ein Verfahren zur Herstellung eines Dichtungselements mit einem Träger und einer an diesem befestigten Wabenstruktur gemäß dem Oberbegriff des Hauptanspruchs.

Dichtungselemente der beschriebenen Art sind aus dem Stand der Technik bekannt, beispielsweise bei Gasturbinen oder thermischen Turbomaschinen. Die Dichtungselemente werden dabei als so genannte anstreifbare Dichtungssegmente eingesetzt. Die Wabenstruktur ist üblicherweise mittels eines speziellen Löt- und/oder Diffusionsprozesses auf den Träger aufgebracht. Der Träger selbst ist beispielsweise in Form eines Gussteils oder eines Blechteils ausgestaltet, etwa in Form eines Rings oder eines Ringsegments.

Um eine Spalte zwischen einem feststehenden und einem rotierenden Bauteil abzudichten, wie etwa bei Laufschaufeln oder Wellen, bzw. um einen derartigen Spalt möglichst gering zu halten und damit die Leistung und/oder den Wirkungsgrad der thermischen Turbomaschine oder der Gasturbine zu verbessern, werden die genannten anstreifbaren Dichtungen (abradible seals) verwendet. Insbesondere im heißen Turbinenteil werden derartige, honigwabenartige Dichtstrukturen eingesetzt. Diese bestehen aus dünnen Streifen aus Metallfolien, die zu wabenartigen Strukturen zusammengesetzt sind. Die Metallfolien werden entsprechend auf eine vorgegebene Breite geschnitten und so umgeformt, dass abgeflachte und in verschiedenen Folienstreifen zueinander parallele nach unten bzw. oben auskragende Plateaus entstehen. Durch die Hintereinanderreihung oder Aufeinanderlegung einer Vielzahl derartig geformter Metallfolienstreifen entsteht die bekannte Wabenstruktur.

Die auf diese Weise erzeugte Wabenstruktur oder Zellenstruktur dient als anstreifbare Dichtung. Sie ist so aufgebaut, dass sie schnell rotierenden Bauteilen beim Anstreifen wenig Widerstand entgegensetzt und somit die rotierenden Bauteile, wie etwa Schaufeln, vor Schädigung bewahrt.

Bei den aus dem Stand der Technik bekannten Dichtungselementen erfolgt das Verbinden der einzelnen Lagen der Wabenstruktur untereinander sowie das Befestigen der Wabenstruktur an dem Träger mittels eines Lötvorganges. Hierbei werden übliche Hartlote verwendet, etwa Legierungen mit hohem Gehalt an Nikkel oder Kobalt. Da diese Nickel- oder Kobaltlegierungen hohe Schmelzpunkte aufweisen, werden zur Absenkung der Schmelztemperatur und damit zur Erzeugung eines brauchbaren Hartlot-Werkstoffes schmelzpunkterniedrigende Legierungselemente, wie etwa Bor, zugesetzt. Eine andere Variante besteht darin, die Hartlote in Form eutektischer Legierungen mit intrisisch niedrigem Schmelzpunkt auszubilden. So sind etwa eutektische oder nahe-eutektische Zusammensetzungen im System Nickel-Silizium bekannt. Die aus dem Stand der Technik bekannten Hartlote haben eine Solidus-Temperatur im Bereich von 800 bis 1300 °C.

Die schmelzpunkterniedrigenden Elemente, wie etwa Bor oder Silizium bringen einige Nachteile mit sich. Während sich das Hartlot im schmelzflüssigen Zustand befindet, diffundieren diese Elemente in den Werkstoff der Wabenstruktur sowie in den Werkstoff des Trägers und bilden mit den Legierungselementen dieser Werkstoffe beispielsweise intermetallische Verbindungen, wie etwa Boride oder Silizide, etwa des Typs CrₓB_{y}. Üblicherweise findet man diese intermetallischen Verbindungen an den Korngrenzen der Grundwerkstoffe oder an den Korngrenzen des wiedererstarrten Lotes. Sie führen zu einer Versprödung der Grundwerkstoffe und des Lotes und somit des gesamten Verbundes des Dichtungselements.

Ein weiterer Nachteil besteht darin, dass manche der entstehenden intermetallischen Verbindungen, etwa Chromboride (CrₓB_{y}) korrosionsanfällig sind.

Da die erfindungsgemäßen Dichtungselemente durch heiße Prozessmedien hohen Betriebstemperaturen ausgesetzt sind, müssen sie gegen Heißgasangriff und damit gegen Hochtemperaturoxidation, Hochtemperatursulfidierung und/oder Hochtemperaturkarburierung beständig sein. Dies wird bei den aus dem Stand der Technik bekannten Dichtungselementen dadurch erreicht, dass man hoch mit Chrom legierte Nickel-Basis-Legierungen als Werkstoff für die Wabenstruktur verwendet.

Aus der JP-A-02251364 ist ein Verfahren zur Herstellung einer Wabenstruktur aus Aluminium vorbekannt, bei welcher profilierte Elemente gegeneinander verspannt und verlötet werden.

Die FR-A-2258524 beschreibt eine Dichtungsanordnung für Turbomaschinen, bei welcher eine Wabenstruktur auf eine Platte mittels eines Sinterverfahrens aufgebracht wird.

Ein weiteres Herstellungsverfahren für eine Wabenkonstruktion aus Aluminium zeigt die JP-A-59179265. Dabei werden die einzelnen profilierten Elemente miteinander verlötet.

Der Erfindung liegt die Aufgabe zugrunde, ein Verfahren zur Herstellung eines Dichtungselements der eingangs genannten Art zu schaffen, welches bei einfachem Aufbau und einfacher Ausgestaltung kostengünstig und betriebssicher anwendbar ist und die Nachteile des Standes der Technik vermeidet.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass das Verbinden der einzelnen Lagen der Wabenstruktur und das Verbinden der Wabenstruktur mit dem Träger mittels eines Lötverfahrens erfolgt, bei welchem als Lötwerkstoff entweder reines Aluminium oder eine Aluminium-Legierung verwendet wird.

Das erfindungsgemäße Verfahren zeichnet sich durch eine Reihe erheblicher Vorteile aus.

Durch das spezielle erfindungsgemäße Verfahren, bei welchem im Wesentlichen mit Aluminium oder einer Aluminium-Legierung als Lot gearbeitet wird, wird auch der Werkstoff der Wabenstruktur in sich verstärkt, wobei gleichzeitig sowohl der Werkstoff des Trägers als auch der Werkstoff der Wabenstruktur mit Aluminium angereichert wird. Somit erweist sich das erfindungsgemäße Dichtungselement insbesondere hinsichtlich seiner thermischen Beständigkeit und seiner Beständigkeit gegen Heißgasangriffe als besonders vorteilhaft.

Erfindungsgemäß werden somit die aus dem Stand der Technik bekannten Nachteile dadurch überwunden, dass als Lotwerkstoff reines Aluminium oder Aluminium-Legierungen verwendet werden. Durch den Lötprozess bei vergleichsweise niedriger Temperatur wird das Aluminium bzw. die Aluminium-Legierung vollständig in Schmelze umgewandelt. Der Lötprozess wird hierbei oberhalb der Schmelztemperatur des Aluminiums bzw. oberhalb der Liquidus-Temperatur der Aluminium-Legierung durchgeführt. Das schmelzflüssige Aluminium löst dabei den Werkstoff der Wabenstruktur sowie den Grundwerkstoff des Trägers teilweise an, wodurch sich der Schmelzpunkt der so entstandenen Aluminium-Legierung erhöht und das Aluminium isotherm erstarrt und somit einen Verbund der Zellenstruktur mit der Tragstruktur erzeugt. Zusätzlich erfolgt eine Verstärkung der Wände der Wabenstruktur.

In einer weiteren günstigen Ausgestaltung der Erfindung ist vorgesehen, dass nachfolgend eine Wärmebehandlung erfolgt. Sie kann bei Löttemperatur (konstanter Temperatur) oder bei einer Temperatur, die höher als die Löttemperatur ist, durchgeführt werden. Hierdurch erfolgt ein Konzentrationsausgleich durch Diffusion, wobei insbesondere das Innere des folienartigen Werkstoffs der Wabenstruktur, über die Randschicht des Werkstoffs des Trägers mit Aluminium angereichert wird. Dies hat zur Folge, dass die Oxidations- und Heißgaskorrosionsbeständigkeit deutlich verbessert wird.

Das erfindungsgemäße Aluminium bzw. die Aluminium-Legierung, welche als Hartlot verwendet werden, können auf unterschiedlichste Weise aufgebracht werden.

So ist es beispielsweise möglich, die Wabenstruktur zunächst so zu erzeugen, dass die einzelnen gefalteten bzw. umgeformten Lagen durch Widerstandspunktschweißen zueinander fixiert werden. Dies erfolgt so, dass die Lagen oder gefalzten Folienstreifen hochkant zur Oberfläche der Oberfläche des Trägers stehen. In die so entstandenen, unten einseitig geschlossenen Zellen kann Aluminium- oder Aluminiumlegierungspulver eingefüllt werden. Dieser Aufbau wird beispielsweise in einem Vakuumlötofen auf eine Temperatur von etwa 660 bis 1100 °C erwärmt. Hierbei schmilzt das Aluminium bzw. die Aluminium-Legierung, erstarrt nachfolgend und führt zu den beschriebenen Diffusionsvorgängen.

Das Reinaluminiumpulver oder das Aluminiumlegierungspulver kann jedoch auch beispielsweise durch thermisches Spritzen in die zellulare Wabenstruktur eingebracht werden. Ebenso kann der durch Widerstandsschweißen auf die Tragstruktur aufgebrachte Wabenkörper durch Bad-Aluminisierung oder Pack-Aluminisierung oberflächlich mit Aluminium angereichert werden. Es ist auch möglich, ein PVD- oder ein CVD-Verfahren zu verwenden.

In einer besonders günstigen Ausgestaltung der Erfindung ist vorgesehen, dass das Aluminiumlot bzw. die als Lotwerkstoff dienende Aluminium-Legierung vorab auf die Oberfläche der Lagen der Wabenstruktur aufgebracht wird. Diese Variante bietet den Vorteil, dass nicht nur die doppellagigen Wände der Wabenstruktur, sondern auch die anderen Zellenwände, welche nur einlagig ausgebildet sind, mit Aluminium oder einer Aluminium-Legierung benetzt und während des Verarbeitungsverfahrens mit Aluminium angereichert werden können. Das Aufbringen des Aluminiumlotes kann etwa über eine Tauch-Aluminisierung oder eine Bad-Aluminisierung erfolgen. Es ist auch möglich, PVD- oder CVD-Verfahren an der fertigen Folie einzusetzen. Es ist auch möglich, die Folie vor dem Fertigwalzen mit Aluminium oder einer geeigneten Aluminium-Legierung walzzuplattieren.

In vorteilhafter Weiterbildung ist es auch möglich, eine Aluminiumfolie zu verwenden. Diese wird etwa bei der Herstellung der Wabenstruktur gleich wie die Lagen des Grundwerkstoffes verformt und direkt beim Aufbau der Wabenstruktur mit eingearbeitet, so dass das Aluminium in der Zellenstruktur optimal vorplatziert ist.

Hinsichtlich der erforderlichen Temperaturen ist erfindungsgemäß eine Abstimmung an die Legierungen und an die jeweiligen baulichen Maßnahmen möglich. Es ist auch möglich, den Temperaturbereich zwischen 550 und 1150 °C zu wählen.

Vergleicht man den Stand der Technik mit der vorliegenden Erfindung, so ergibt sich, dass der Zusatz von Aluminium die Heißgaskorrosionsbeständigkeit besonders günstig beeinflusst. Dies hat seine Ursache darin, dass der Aluminiumgehalt unter oxidierenden Heißgasbedingungen die Ausbildung dichter und fest anhaftender Aluminiumoxidschichten zur Folge hat (Al₂O₃). Diese oberflächliche Aluminiumoxidschicht schützt den Werkstoff bei hohen Anwendungstemperaturen höchst wirksam vor weiterem Angriff durch Heißgas.

Bei Abwesenheit von Aluminium in der Matrix kann auch das Legierungselement Chrom die Funktion des Aluminiums übernehmen, allerdings mit deutlich geringerer Schutzwirkung bei hohen Temperaturen. Hieraus ergeben sich die aus dem Stand der Technik bekannten Nachteile. Bei den üblichen Folienwerkstoffen, die zur Herstellung der Wabenstruktur verwendet werden, sind aus Gründen der Verarbeitbarkeit beim Stand der Technik nur Werkstoffe verwendet, die, wenn überhaupt, nur geringfügig mit Aluminium legiert sind. Auch die aus dem Stand der Technik bekannten Hartlote sind meist überhaupt nicht mit Aluminium legiert. Dies und die Anwesenheit von intermetallischen Verbindungen im Lot führen zu einer meist geringen Heißgaskorrosionsbeständigkeit der Hartlote. Insgesamt ist der aus dem Stand der Technik bekannte Aufbau deshalb wenig oxidations- und heißgaskorrosionsbeständig. Insbesondere stellen die freien und lotbenetzten Oberflächen des Dichtungselements beim Stand der Technik Schwachstellen hinsichtlich der Heißgasbeständigkeit im Gasturbineneinsatz dar.

Die Erfindung bezieht sich, wie bereits oben stehend angedeutet, auf eine Wabenstruktur, die als Basiswerkstoff nicht Aluminium umfasst. Basiswerkstoffe oder Basislegierungen sind insbesondere Eisenbasislegierungen, Nickelbasislegierungen, Kobaltbasislegierungen oder Titanbasislegierungen oder deren Kombinationen.

Gleiches trifft für die Materialauswahl des Trägers zu.

Weiterhin bezieht sich die Erfindung sowohl auf Lötverfahren, bei denen ohne Flussmittel gearbeitet wird, als auch auf Lötverfahren mit Flussmitteln. Geeignete Flussmittel können beispielsweise Fluoride, dabei insbesondere Kaliumaluminiumfluoride sein.

Im Folgenden wird die Erfindung anhand eines Ausführungsbeispiels in Verbindung mit der Zeichnung beschrieben. Dabei zeigt:
- Fig. 1: eine schematische Darstellung des Aufbaus der erfindungsgemäßen Wabenstruktur, und
- Fig. 2: eine perspektivische, stark vereinfachte Darstellung des Aufbaus eines erfindungsgemäßen Dichtungselements.

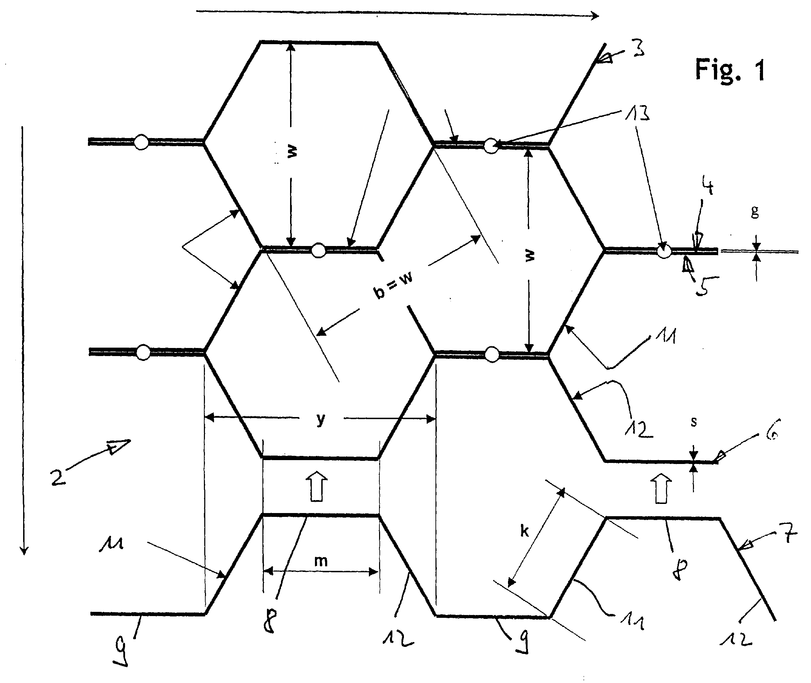

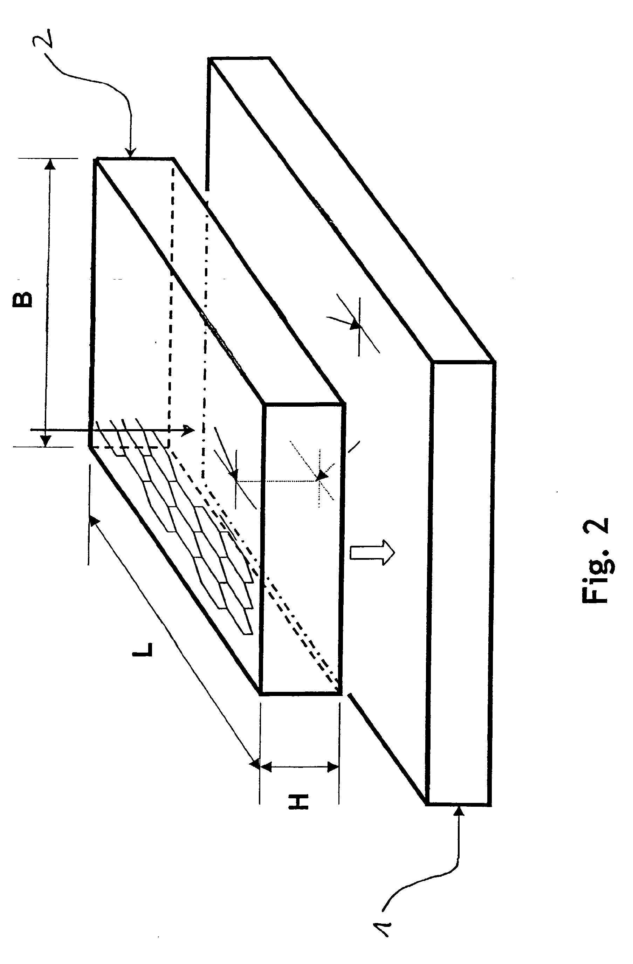

Die Fig. 1 zeigt in schematischer Weise den Aufbau einer erfindungsgemäßen Wabenstruktur 2. Diese ist aus einzelnen Lagen 3, 4, 5, 6, 7 von profilierten, dünnen, folienartigen, metallischen Blechen zusammengesetzt. Die einzelnen Bleche sind gefalzt und werden so ausgebildet, dass sich einzelne Plateaus 8, 9 bilden, die jeweils nach oben bzw. nach unten weisen und zueinander parallel sind. Die einzelnen Plateaus werden durch Schrägen 11, 12 miteinander verbunden. Es ergibt sich somit durch Aufeinanderlegen der einzelnen Lagen eine wabenartige Struktur, welche Bereiche mit einer einlagigen Wandstärke, die durch die Schrägen 11, 12 gebildet werden, sowie Bereiche mit einer doppelten Wandstärke, die durch die Plateaus 8, 9 gebildet werden, aufweisen. Die Plateaubereiche 8, 9 werden durch Punktschweißungen 13 miteinander fixiert. Es ergibt sich somit eine Wabenstruktur mit einer Wabenhöhe w, einer Wabenbreite b, einer Schichtdicke in den einlagigen Bereichen von s, sowie einer Schichtdicke in den doppellagigen Bereichen von g. In Fig. 1 ist der Basisbereich der Plateaus mit m bezeichnet, während die Schrägen eine Länge von k aufweisen. Mit y wird die Diagonallänge der jeweiligen Wabe bezeichnet. Die Fig. 2 zeigt in vereinfachter, perspektivischer Darstellung einen Träger 1, welcher als Gussteil oder Blech-Prägeteil ausgestaltet sein kann. Er kann flach oder ringförmig oder in Form von Ringsegmenten ausgebildet sein. Die durch die Wabenstruktur gebildete Zellenstruktur wird derart auf die Oberfläche der Tragstruktur bzw. des Trägers aufgebracht, dass die ursprünglichen Folienstreifen (Lagen) der Wabenstruktur hochkant, also in einem Winkel von 90° zur Oberfläche des Trägers stehen, so wie dies in Fig. 2 gezeigt ist. Dort ist mit H die Breite der Folienstreifen und damit die Dicke der aus den Zellen ausgebildeten Wabenstruktur 2 dargestellt. Mit dem Bezugszeichen L ist die Richtung parallel zu den Doppelwänden und gleichzeitig die Richtung der Relativbewegung anstreifender, rotierender Bauteile dargestellt. Das Bezugszeichen B zeigt die Breite des anstreifbaren Bereichs des erfindungsgemäßen Dichtungselements.

Als Werkstoff für die Wabenstruktur kann beispielsweise eine Folie aus einem Hochtemperatur-Werkstoff verwendet werden, wie etwa Hayes 214 oder PM 2000. Der Träger kann aus einer Nickel-Basis-Feinguss-Legierung, wie etwa C1023 bestehen.
Die Erfindung ist nicht auf das gezeigte Ausführungsbeispiel beschränkt, vielmehr ergeben sich im Rahmen der Erfindung vielfältige Abwandlungs- und Modifikationsmöglichkeiten.

### Bezugszeichenliste:

- 1: Träger
- 2: Wabenstruktur
- 3-7: Lagen der Wabenstruktur
- 8, 9: Plateau
- 11, 12: Schräge
- 13: Punktverschweißung

## Patentansprüche

1. Verfahren zur Herstellung eines Dichtungselements mit einem Träger (1) und einer an diesem befestigten Wabenstruktur (2), wobei die Wabenstruktur (2) aus einzelnen profilierten Lagen (3 bis 7) aus einem dünnen, folienartigen, metallischen Werkstoff wabenartig zusammengesetzt wird, wobei die Lagen (3 bis 7) miteinander verbunden werden und wobei die Wabenstruktur (2) mit dem Träger (1) verbunden wird, **dadurch gekennzeichnet, dass** das Verbinden der einzelnen Lagen (3 bis 7) der Wabenstruktur (2) und das Verbinden der Wabenstruktur (2) mit dem Träger (1) mittels eines Lötverfahrens erfolgt, bei welchem als Lötwerkstoff reines Aluminium verwendet wird.

2. Verfahren nach Anspruch 1, **dadurch gekennzeichnet, dass** das Löten mit einer Löttemperatur oberhalb der Schmelztemperatur des Aluminiums erfolgt.

3. Verfahren nach Anspruch 1 oder 2, **dadurch gekennzeichnet, dass** nachfolgend eine Wärmebehandlung bei Löttemperatur erfolgt.

4. Verfahren nach Anspruch 1 oder 2, **dadurch gekennzeichnet, dass** nachfolgend eine Wärmebehandlung bei einer Temperatur höher als die Löttemperatur erfolgt.

5. Verfahren nach einem der Ansprüche 1 bis 4, **dadurch gekennzeichnet, dass** der Lotwerkstoff in Pulverform aufgebracht wird.

6. Verfahren nach einem der Ansprüche 1 bis 4, **dadurch gekennzeichnet**, das der Lotwerkstoff durch thermisches Spritzen aufgebracht wird.

7. Verfahren nach einem der Ansprüche 1 bis 4, **dadurch gekennzeichnet, dass** der Lotwerkstoff durch Bad-Aluminisierung aufgebracht wird.

8. Verfahren nach einem der Ansprüche 1 bis 4, **dadurch gekennzeichnet, dass** der Lotwerkstoff durch Pack-Aluminisierung aufgebracht wird.

9. Verfahren nach einem der Ansprüche 1 bis 4, **dadurch gekennzeichnet, dass** der Lotwerkstoff durch eine PVD-Beschichtung aufgebracht wird.

10. Verfahren nach einem der Ansprüche 1 bis 4, **dadurch gekennzeichnet, dass** der Lotwerkstoff durch eine CVD-Beschichtung aufgebracht wird.

11. Verfahren nach einem der Ansprüche 1 bis 10, **dadurch gekennzeichnet, dass** der Lotwerkstoff vor der Verarbeitung auf zumindest eine Oberfläche des Werkstoffs für die Wabenstruktur (2) aufgebracht wird.

12. Verfahren nach einem der Ansprüche 1 bis 11, **dadurch gekennzeichnet, dass** der Lotwerkstoff in Form einer Zusatzfolie auf zumindest eine Oberfläche des Werkstoffs für die Wabenstruktur (2) aufgebracht wird.

13. Verfahren nach einem der Ansprüche 1 bis 4 und 11 bis 12,
**dadurch gekennzeichnet, dass** die Oberfläche der zu verbindenden Elemente vor dem Lötprozess mit einem die Oberfläche reinigenden, niedrigschmelzenden Flussmittel beschichtet wird.

14. Verfahren nach Anspruch 13, **dadurch gekennzeichnet, dass** als Flussmittel Fluoride verwendet werden.

15. Verfahren nach Anspruch 13 und 14, **dadurch gekennzeichnet, dass** als Flussmittel Kaliumaluminiumfluoride verwendet werden.

16. Verfahren nach den Ansprüchen 1 bis 15, **dadurch gekennzeichnet, dass** die Wabenstruktur (2) die aus einzelnen profilierten Lagen (3 bis 7) besteht, aus Werkstofflegierungen gefertigt werden, die auf der Basis Eisen, Nickel, Kobalt, Titan oder deren Kombination bestehen.

## Claims

1. Method for the production of a sealing element with a backing (1) and a honeycomb structure (2) attached to this backing (1), in which the cellular arrangement of the honeycomb structure (2) is formed by individual, profiled layers (3 to 7) made of a thin, foil-type, metallic material, and in which the layers (3 to 7) are bonded to each other and the honeycomb structure (2) is bonded to the backing (1), **characterized in that** the bonding of the individual layers (3 to 7) of the honeycomb structure (2) and the bonding of the honeycomb structure (2) to the backing (1) are performed by means of a brazing process in which pure aluminum is used as brazing filler material.

2. Method in accordance with Claim 1, **characterized in that** brazing is performed at a brazing temperature above the melting temperature of the aluminum.

3. Method in accordance with Claim 1 or 2, **characterized in that** a subsequent heat treatment is performed at brazing temperature.

4. Method in accordance with Claim 1 or 2, **characterized in that** a subsequent heat treatment is performed at a temperature above the brazing temperature.

5. Method in accordance with one of the Claims 1 to 4, **characterized in that** the brazing filler material is applied in powder form.

6. Method in accordance with one of the Claims 1 to 4, **characterized in that** the brazing filler material is applied by thermal spraying.

7. Method in accordance with one of the Claims 1 to 4, **characterized in that** the brazing filler material is applied by bath aluminizing.

8. Method in accordance with one of the Claims 1 to 4, **characterized in that** the brazing filler material is applied by pack aluminizing.

9. Method in accordance with one of the Claims 1 to 4, **characterized in that** the brazing filler material is applied by physical vapor deposition (PVD).

10. Method in accordance with one of the Claims 1 to 4, **characterized in that** the brazing filler material is applied by chemical vapor deposition (CVD).

11. Method in accordance with one of the Claims 1 to 10, **characterized in that** the brazing filler material is applied to at least one surface of the material used for the honeycomb structure (2) prior to processing.

12. Method in accordance with one of the Claims 1 to 11, **characterized in that** the brazing filler material is applied to at least one surface of the material used for the honeycomb structure (2) in the form of an additional foil.

13. Method in accordance with one of the Claims 1 to 4 and 11 to 12, **characterized in that** the surface of the items to be joined is wetted with a surface-cleaning, low-melting flux prior to brazing.

14. Method in accordance with Claim 13, **characterized in that** fluorides are used as flux.

15. Method in accordance with Claims 13 and 14, **characterized in that** potassium aluminum fluorides are used as flux.

16. Method in accordance with Claims 1 to 15, **characterized in that** the honeycomb structure (2), which is formed by individual profiled layers (3 to 7), is made of material alloys of which the basis is iron, nickel, cobalt, titanium or combinations thereof.

## Revendications

1. Procédé pour fabriquer un élément d'étanchéité avec un support (1) et une structure à nid d'abeilles (2) fixée à celui-ci, sachant que la structure à nid d'abeilles (2) est un assemblage en nid d'abeilles de différentes couches profilées (3 à 7) constituées d'un matériau métallique mince et pelliculaire, que les couches (3 à 7) sont reliées entre elles et que la structure à nid d'abeilles (2) est reliée au support (1), **caractérisé en ce que** la liaison entre les différentes couches (3 à 7) de la structure à nid d'abeilles (2) et la liaison de la structure à nid d'abeilles (2) avec le support (1) sont réalisées par un procédé de brasage dans lequel de l'aluminium pur est utilisé comme matériau de brasage.

2. Procédé selon la revendication n° 1, **caractérisé en ce que** le brasage est effectué à une température au-dessus de la température de fusion de l'aluminium.

3. Procédé selon la revendication n° 1 ou 2, **caractérisé en ce qu'**un traitement thermique est ensuite réalisé sous la température de brasage.

4. Procédé selon la revendication n° 1 ou 2, **caractérisé en ce qu'**un traitement thermique est ensuite réalisé sous une température supérieure à la température de brasage.

5. Procédé selon une des revendications n° 1 à 4, **caractérisé en ce que** le métal d'apport est appliqué sous forme de poudre.

6. Procédé selon une des revendications n° 1 à 4, **caractérisé en ce que** le métal d'apport est appliqué par injection thermique.

7. Procédé selon une des revendications n° 1 à 4, **caractérisé en ce que** le métal d'apport est appliqué par aluminisation en phase liquide.

8. Procédé selon une des revendications n° 1 à 4, **caractérisé en ce que** le métal d'apport est appliqué par aluminisation en phase solide.

9. Procédé selon une des revendications n° 1 à 4, **caractérisé en ce que** le métal d'apport est appliqué par un procédé PVD.

10. Procédé selon une des revendications n° 1 à 4, **caractérisé en ce que** le métal d'apport est appliqué par un procédé CVD.

11. Procédé selon une des revendications n° 1 à 10, **caractérisé en ce que** le métal d'apport est appliqué avant la transformation sur au moins une surface du matériau prévu pour la structure à nid d'abeilles (2).

12. Procédé selon une des revendications n° 1 à 11, **caractérisé en ce que** le métal d'apport est appliqué sous forme d'une feuille supplémentaire sur au moins une surface du matériau prévu pour la structure à nid d'abeilles (2).

13. Procédé selon une des revendications n° 1 à 4 et n° 11 à 12, **caractérisé en ce que** la surface des éléments à joindre est couverte avant le brasage d'un fondant nettoyant la surface et ayant un point de fusion bas.

14. Procédé selon la revendication n° 13, **caractérisé en ce que** des fluorures sont utilisés en tant que fondants.

15. Procédé selon les revendications n° 13 et 14, **caractérisé en ce que** des fluorures d'aluminium et de potassium sont utilisés en tant que fondants.

16. Procédé selon les revendications n° 1 à 15, **caractérisé en ce que** les structures à nid d'abeilles (2) qui sont composées de différentes couches profilées (3 à 7), sont fabriquées d'alliages de matériaux à base de fer, de nickel, de cobalt, de titane ou de leurs combinaisons.
